# EUROPEAN PATENT SPECIFICATION

(11) **EP 1 861 452 B1**
(45) Date of publication and mention of the grant of the patent: **24.08.2011**
(21) Application number: 05729776.4
(22) Date of filing: 23.03.2005
(51) Int. Cl.: C08J 3/22

(54) **SCENTED HANDLE FOR USE IN A RAZOR**
DUFTENDER GRIFF ZUR VERWENDUNG IN EINEM RASIERER
POIGNEE PARFUMEE A UTILISER DANS UN RASOIR

(43) Date of publication of application: 05.12.2007
(73) Proprietor: BIC Violex S.A., 145 69 Anixi, Attiki (GR)
(72) Inventor: REGGIS, Kostas, GR-152 34 Halandri Athens (GR)
(74) Representative: Cabinet Plasseraud
(86) International application number: PCT/EP2005/003971
(87) International publication number: WO 2006/099889

(56) References cited:
- WO-A-98/30621
- WO-A1-00/08095
- DE-A1- 3 721 916
- DE-A1- 19 842 203
- US-A1- 2004 151 933
- US-A1- 2004 192 847

## Description

The present invention relates to a handle for use in a razor. More particularly, the present invention relates to a handle comprising a scented grip portion, and to a process for manufacturing same.

Razors and wet shaving devices are known in the art. Handles for use in such razors can comprise a rigid part and an elastomeric part, wherein the elastomeric part provides a grip portion, which greatly facilitates the manipulation of the razor during shaving.

Shaving is usually regarded as a cumbersome but necessitated task. In order to make shaving a pleasant, enjoyable and fulfilling moment of the day, there is presently provided a scented razor handle, and a process for manufacturing same.

US 2004/151933 teaches that styrene block polymers are suitable for making handles of household items, especially the items what has a contact with water, e.g. shaving razors.

DE 3 721 916 teaches that scenting polymers can be produced by mixing a polymer and a fragrance incorporated into a porous carrier. The porous carrier can be a porous polyolefin.

In one aspect, the present invention is directed to a process for making the elastomeric part of a razor handle comprising an elastomeric part, comprising the steps of:
a) Providing at least one elastomeric material selected from the group of styrene block copolymers, including styrene-ethylene-butylene, styrene-butadiene, and blends thereof;
b) Providing a porous polymeric olefin support comprising at least one fragrance;
c) Optionally providing at least one pigment;
d) Preparing a mixture consisting essentially of said elastomeric material and said polymeric support, and optionally said pigment, by mixing said elastomeric material and said polymeric olefin support and optionally said pigment;
e) Injecting the resulting mixture consisting essentially of said elastomeric material and said polymeric support, and optionally said pigment, to form at least one elastomeric grip portion in said handle.

In the context of the present invention, 'elastomer' or 'elastomeric compound' refers to any elastomer composition known in the art and of any elastomeric hardness range, especially those suitable for making a grip portion, and those that are in the Shore A hardness range. This includes elastomers and thermoplastic elastomers, as well as blends thereof. Suitable elastomers include nitrile rubbers (NBR), styrene butadiene rubbers (SDR), ethylene-propylene terpolymers (EPDM), and (compatible) mixtures thereof. Examples of suitable thermoplastic elastomers include styrene block copolymers, e.g. styrene-butylene block copolymers (SBS), styrene-ethylene-butylene block copolymers (SEBS), and (compatible) blends thereof. Moreover, said elastomeric material may contain at least one additive. Examples of additives include chemicals commonly classed as antioxidants, UV-stabilisers, adhesion modifiers, smell reducers and other such materials that are known to those skilled in the art and function to improve the processing of said material, enhance its self-life and service durability, improve the adhesion to substrate "polymeric supports" that are not inherently inter-compatible and retard inherent sensory defects, such as the inherent typical smell of elastomers and elastomeric compounds.

In the context of the present invention, porous polymeric olefin support,' refers to any porous polyolefin-containing material which is suitable for the loading of at least one fragrance. Examples thereof include porous olefins, such as porous polyethylene (e.g. low density polyethylene, LDPE; or very low density polyethylene, VLDPE); porous polypropylene, and blends thereof. Advantageously according to the invention, said polymeric support ensures proper loading of the fragrance, with a defined and reproducible loading rate. Moreover, said polymeric support advantageously allows the incorporation of the fragrance while allowing processing thereof under harsh temperature conditions: fragrances are usually very heat-sensitive, and tend to be very easily degraded during processing like molding operations. Moreover, advantageously according to the invention, the fragrance is distributed throughout the elastomeric material in an optimal way.

In the context of the present invention, 'fragrance' or 'scent' means any composition able to impart a scent perceived by a human being. This includes mixtures of aromatic synthetic raw materials (like Lyral) and others of natural origin, like natural oils (orange oil, citrus oil, lavander oil, lemon oil...). Said fragrance can be a more complex composition, comprising several scent-imparting compounds. Said fragrance can be reminiscent of flowers (e.g. lavender, rose, magnolia, lily...) and/or fruits (orange, citrus, apple, vanilla ...).

According to the invention, said fragrance can be reminiscent of lavender. This fragrance advantageously conveys the feeling of freshness, cleanliness and purity, thus making shaving a unique experience for the senses and comfort perception of the user.

In the context of the present invention, 'pigment' refers to any composition comprising a dye or colorant, and which is suitable for processing according to the invention. Said pigment can advantageously be selected to confer a colour matching the selected fragrance. For example, if said fragrance comprises a lavender scent, it is possible to use a violet or purple pigment, in order to confer a synergic effect on the user: the visual impression created by the colour acts in combination with the scent, thus providing the user with a unique combinatory sensory experience. Alternatively, said pigment can also be used in another part of the handle, for example in at least one rigid plastic portion of the handle.

Mixing and injection (injection molding) techniques are known in the art. For example, step c) according to the invention can include tumble drying. For example, the injection step can be carried out under conditions known in the art, for example at temperatures ranging 180-210°C. It is also possible to use co-injection techniques: said grip portion of the handle can then be co-injected together with another part of said handle, for instance a rigid portion of the handle. The skilled person would know how to set up such a process.

In the context of the present invention, 'grip portion' refers to any elastomeric element of the razor handle which is susceptible to be contacted with the user's hand skin during any shaving operation. Said grip portion can be suitably designed in terms of shape and position on the handle, in order to facilitate the manipulation thereof, for any position or configuration of the razor with respect to any body part (beard, moustache, armpits, legs...) during the shaving thereof. Said grip portion can thus have various shapes and designs. For example, said grip portion can be integral with at least one rigid plastic portion of the handle. Alternatively, said grip portion can be in the shape of at least one bulky patch, in the shape of a plurality of patches, in the shape of a plurality of fins, or combinations thereof. Said grip portion can also comprise a plurality of protrusions. The present invention encompasses the various designs thereof, as well as their location(s) on the handle.

The process of the invention is advantageously easy to implement on standard equipment, and avoids degradation of the fragrance molecules during processing.

In another aspect, the present invention is directed to a razor handle obtainable by the process as described herein.

The handle of the invention also comprises at least one rigid plastic part in combination with said grip portion, as detailed above. The overall design of said handle is advantageously ergonomic, thereby facilitation the manipulation by the user.

In another aspect the present invention provides a razor handle comprising at least one grip portion, wherein said grip portion comprises at least one fragrance.

Advantageously according to the invention, said grip portion can release said fragrance for a duration of at least two months, preferably at least three months, most preferably at least six months (upon storage under normal conditions). Moreover, since the fragrance is incorporated in the grip portion, it is less exposed to hot water than other parts of the razor, especially the head, which is repeatedly contacted with hot water during shaving and rinsing operations. The fragrance, which generally includes heat-sensitive molecules, is thus advantageously less exposed to hot water, and thus has a longer life expectancy, providing an extra-sustained release of the fragrance, and an accordingly lengthened duration of the scent.

The final concentration of the fragrance in the grip can be adjusted by those skilled in the art. Said final concentration can be less than 1% (w/w), for example from 0.1 to 0.9%, more particularly from 0.25% to 0.9%, e.g. 0.3, 0.4, ..., 0.7, 0.8, 0.9%.

In another aspect, the present invention is also directed to a razor, especially a wet razor, comprising a handle as described herein. Said razor is generally assembled by mounting a shaving head onto said handle. The shaving head generally comprises a platform, and at least one blade. Said platform can advantageously comprise two or three blades, optionally a guard bar (front bar, especially rubber front bar), and optionally a shaving aid. Said razor can be for use by a male and/or a female.

The advantages of the handles, razors and processes according to the invention will become apparent from the following examples, which are given below as mere illustrations, and are non limitative.

### Examples

A razor handle is manufactured as follows:
A porous olefin support (micro-porous low density polyethylene pellets, Accurel ® MP300, Membrana) is loaded via an established process and known to those skilled in the art, with a lavender fragrance (Lavender desire 25704/01, Vioryl) at room temperature, to yield an impregnated polymeric sponge (60% fragrance, 40% polymeric porous support).
The resulting pellets of the impregnated polymeric sponge are then mixed with a colour concentrate (Neolen White 1959, D. Souris), which comprises 70% pigment (white) and 30% polymeric carrier (polyethylene). The mix ratio is 3.5 kg of colour concentrate to 0.6 kg of lavender-impregnated polymeric sponge. The mixing is performed in a 50 It Loedige FM-50E batch mixer, at low speed for 5 minutes. The resulting mixture contains 14.63% of impregnated polymeric sponge and 85.37% of Neolen White 1959. This mixture (4.1kg) is then mixed (tumble drying) with elastomer (50kg) (styrene-ethylene-butylene copolymer/styrene butadiene copolymer, Bergaflex, Polyone).
The final concentration of the fragrance is 0.66% in the final product, which is co-injected in a moulding machine at temperatures ranging between 180 and 210 degrees Centigrade onto the-rigid-plastic part of the handle, which is in this instance made of a transparent ABS material, Starex, Samsung.
The resulting handle is then assembled with a razor head comprising 3 blades, a front bar, and a shaving aid.

The grip portion (elastomeric part) advantageously dispenses a very pleasant lavender scent, with a durability of at least six months. Tests were done with the packaged shavers in their saleable blisters (that are not air-tight). These blisters were placed in environmental chambers at 55 degrees Centigrade and concurrently 45% RH (relative humidity) for a period of 14 days. At the conclusion of this test, upon opening the blisters and allowing for settlement of odour it was evidenced by the test operators that the individual handles still retained the pleasant lavender scent. Without being bound by theory, it is postulated that for temperature accelerated processes (such as release of scent) an Arrhenius type equation can approximate them. It is further postulated that for every ten degrees reduction in temperature an analogous decade effect in time can be anticipated. For example, at 45 degrees centigrade (ten degrees reduction from the test temperature) a similar behaviour may have been anticipated after 20 weeks (a decade increase in time duration). There are several parameters that influence this postulation that are beyond the scope of this patent and hence the claim that the durability is at least six months under conditions of normal storage.

The same process is repeated to provide handles with different fragrances: another floral scent (rose, Rose plast 25700/12, Vioryl), a fruit fragrance (orange, Orangina plast 3797/12, Vioryl) and a musky fragrance (Escape can 23697/12, Vioryl).

For each of these handles, the duration of the scent release is at least six months upon storage.

A panel of users (male and female) tests the handles and razors, and finds very satisfactory both the released scent and the duration thereof.

## Claims

1. A process for making the elastomeric part of a razor handle comprising an elastomeric part, comprising the steps of:
a) Providing at least one elastomeric material selected from the group of styrene block copolymers, including styrene-ethylene-butylene, styrene-butadiene, and blends thereof;
b) Providing a porous polymeric olefin support comprising at least one fragrance;
c) Optionally providing at least one pigment;
d) Preparing a mixture consisting essentially of said elastomeric material and said polymeric support, and optionally said pigment, by mixing said elastomeric material and said polymeric olefin support and optionally said pigment;
e) Injecting the resulting mixture consisting essentially of said elastomeric material and said polymeric support, and optionally said pigment, to form at least one elastomeric grip portion in said handle.

2. Process according to claim 1, wherein said fragrance is selected from the group consisting of floral fragrances, fruit fragrances, and mixtures thereof.

3. Process according to any one of the preceding claims, wherein step c) includes tumble drying.

4. A razor handle obtainable by the process of any one of claims 1-3.

5. A razor comprising a handle of claim 4.

## Patentansprüche

1. Ein Verfahren zur Herstellung des elastomerischen Teils eines Rasiererhandgriffs umfassend einen elastomerischen Teil umfassend die Schritte:
a) Bereitstellen von mindestens einem elastomerischen Material ausgewählt aus der Gruppe von Styren-Block-Copolymeren, enthaltend Styren-Ethylen-Buthylen, Styren-Butadien und Mischungen davon;
b) Bereitstellen eines porösen polymerischen Olefinträgers umfassend mindestens einen Duftstoff;
c) gegebenenfalls Bereitstellen von mindestens einem Pigment;
d) Herstellen einer Mischung bestehend im Wesentlichen aus besagtem elastomerischen Material und besagtem polymerischen Träger und gegebenenfalls besagtem Pigment durch Mischen von besagtem elastomerischen Material und besagtem polymerischen Olefinträger und gegebenenfalls besagtem Pigment;
e) Spritzen des resultierenden Gemisches bestehend im Wesentlichen aus besagtem elastomerischen Material und besagtem polymerischen Träger und gegebenenfalls besagtem Pigment unter Ausbildung von mindestens einem elastomerischen Griffbereich von besagtem Handgriff.

2. Verfahren nach Anspruch 1, wobei der besagte Duftstoff ausgewählt ist aus einer Gruppe enthaltend Blumenduftstoffe, Früchteduftstoffe und Mischungen davon.

3. Verfahren gemäß einem der vorhergehenden Ansprüche, wobei Schritt c) Trommeltrocknen enthält.

4. Ein Rasierhandgriff herstellbar durch ein Verfahren nach einem der Ansprüche 1 bis 3.

5. Ein Rasierapparat umfassend einen Handgriff nach Anspruch 4.

## Revendications

1. Procédé de fabrication de la partie élastomère d'un manche de rasoir comprenant une partie élastomère, comprenant les étapes consistant à :
a) fournir au moins un matériau élastomère choisi dans le groupe constitué par les copolymères séquencés du styrène, incluant le styrène-éthylène-butylène, le styrène-butadiène, et leurs mélanges ;
b) fournir un support poreux en polymère oléfinique comprenant au moins un parfum ;
c) optionnellement fournir au moins un pigment ;
d) préparer un mélange consistant essentiellement en ledit matériau élastomère et ledit support polymère, et éventuellement ledit pigment, en mélangeant ledit matériau élastomère et ledit support oléfinique polymère et éventuellement ledit pigment ;
e) injecter le mélange résultant consistant essentiellement en ledit matériau élastomère et ledit support polymère, et optionnellement ledit pigment, pour former au moins une partie de préhension élastomère dans ledit manche.

2. Procédé selon la revendication 1, dans lequel ledit parfum est choisi dans le groupe constitué par les parfums de fleurs, les parfums de fruits, et leurs mélanges.

3. Procédé selon l'une quelconque des revendications précédentes, dans lequel l'étape c) comprend le séchage par culbutage.

4. Manche de rasoir pouvant être obtenu par le procédé selon l'une quelconque des revendications 1 à 3.

5. Rasoir comprenant un manche de la revendication 4.
